(19) Europäisches Patentamt / European Patent Office / Office européen des brevets

(11) **EP 3 642 923 B1**

(12) **EUROPÄISCHE PATENTSCHRIFT**

(45) Veröffentlichungstag und Bekanntmachung des Hinweises auf die Patenterteilung:
**20.05.2026   Patentblatt 2026/21**

(21) Anmeldenummer: **18731859.7**

(22) Anmeldetag: **22.06.2018**

(51) Internationale Patentklassifikation (IPC):
*H02G 15/103* (2006.01)      *H02G 15/184* (2006.01)
*H02G 1/14* (2006.01)

(52) Gemeinsame Patentklassifikation (CPC):
**H02G 15/103; H02G 1/14; H02G 15/184;**
H02G 1/145

(86) Internationale Anmeldenummer:
**PCT/EP2018/066711**

(87) Internationale Veröffentlichungsnummer:
**WO 2018/234522 (27.12.2018 Gazette 2018/52)**

(54) **KABELGARNITUR FÜR HGÜ-KABEL**

CABLE FITTING FOR A HIGH VOLTAGE DIRECT CURRENT TRANSMISSION CABLE

GARNITURE DE CÂBLE POUR CÂBLE DE LIAISON À HAUTE TENSION CONTINUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **23.06.2017  EP 17177580**

(43) Veröffentlichungstag der Anmeldung:
**29.04.2020   Patentblatt 2020/18**

(73) Patentinhaber: SUSONITY Commercial GmbH
**64579 Gernsheim (DE)**

(72) Erfinder:
• **GREB, Marco**
**36396 Steinau an der Straße (DE)**
• **BAUER, Johann**
**64283 Darmstadt (DE)**
• **KURDA, Norbert**
**13589 Berlin (DE)**

(74) Vertreter: **Weckenbrock, Matthias**
**Dr. Müller Patentanwälte**
**Mühlstraße 9a**
**65597 Hünfelden (DE)**

(56) Entgegenhaltungen:
EP-A1- 1 337 022      EP-A1- 3 034 561
WO-A2-03/035124      DE-A1- 102015 209 594

## EP 3 642 923 B1

**Beschreibung**

Die vorliegende Erfindung betrifft eine Kabelgarnitur für Kabel, die zur Hochspannungs-Gleichstrom-Übertragung (HGÜ, englisch: HVDC) von elektrischer Energie einsetzbar ist, wobei die Kabelgarnitur eine elektrisch isolierende Schicht aufweist, ein Verfahren zur Herstellung einer elektrisch isolierenden Schicht einer solchen Kabelgarnitur sowie deren Verwendung.

Im Zuge des stark zunehmenden globalen Energiebedarfs ist es dringend notwendig, große Energiemengen verlustarm über weite Distanzen transportieren zu können. Bisher erfolgt die Übertragung von elektrischer Energie im Bereich der Hochspannung über größere Entfernungen über verlustreiche Wechselstromkabel (englisch: HVAC). Entsprechende Technologien werden seit vielen Jahrzehnten angewandt, sind gut erforscht und weltweit verbreitet.

Durch die stetige Zunahme an Leistungsdichten und Übertragungsraten im internationalen Energiemarkt ist ein Bedarf an Energieübertragungsmöglichkeiten entstanden, die deutlich geringere Verlustleistungen generieren als die Übertragung von Wechselstrom. Es wird daher verstärkt nach Übertragungsmöglichkeiten von Gleichstrom gesucht, da hier eine geringere Verlustleistung erreicht wird. Allerdings werden an die Technologie als solche und insbesondere an die eingesetzten Materialien hohe Anforderungen gestellt.

Im Zuge des möglichen weltweiten Ausbaus von HGÜ-Netzen sind in den letzten Jahren große Anstrengungen unternommen worden Gleichstromsysteme mit hoher und sicherer Leistungsfähigkeit zu entwickeln. Hierbei erweisen sich Erkenntnisse und Technologien, die in der Wechselstrom-übertragung gewonnen wurden, als wertvoll für die Entwicklung, sind aber nicht in jeder Hinsicht übertragbar.

Insbesondere genügen die Isolationskörper von Kabelgarnituren im Hinblick auf die darin verwendeten Materialien noch nicht ausreichend den Anforderungen, die an eine leistungsfähige Isolation bei Exposition in Hochspannungs-Gleichspannungsfeldern gestellt werden.

Das Gleichspannungsfeld (DC) polarisiert das Material des Isolationskörpers über sehr lange Zeit mit gleicher Ausrichtung. Von den leitfähigen Schichten des Hauptleiters (Kern) und des Außenleiters (Erdpotential) eines Kabels werden Raumladungen in das Isolationssystem des Kabels und der Kabelgarnitur injiziert. Diese Raumladungen werden nicht, wie in Wechselstromsystemen (AC), durch Polarisationsumkehr wieder gelöscht, sondern akkumulieren sich über die Zeit und dringen weiter in das Material vor. Dort führen Fehlstellen im Material, beispielsweise Verunreinigungen, Einschlüsse oder Gasblasen, zu einer lokalen Konzentration der Raumladungen, die so groß werden kann, dass das Isolationssystem versagt und es zu Teilentladungen kommt. Mit der Höhe der angelegten Spannung verstärken sich solche Effekte. Ist das daraus folgende Problem bei derzeit üblichen Spannungen von 320 oder 525 kV schon kritisch, sind bei Netzspannungen von 840 kV beziehungsweise 1100 kV, die sich in der Erprobungsphase befinden, hinsichtlich versagender Isolierschichten deutlich größere Probleme zu erwarten. Insbesondere in Kabelgarnituren, worunter Kabelmuffen, Kabelendverschlüsse, Kabelstecker und Kabeldurchführungen zu verstehen sind, die räumliche Zäsuren im Kabelnetz darstellen, ist die Gefahr von heftigen Teilentladungen groß, wenn nicht für eine regelmäßige Ableitung von Raumladungen gesorgt oder Maßnahmen gegen die Ausbildung von Raumladungen ergriffen werden, und so deren Akkumulation verhindert wird.

Die Isolierkörper von Gleichstrom-Hochspannungs-Übertragungssystemen (nachfolgend: HGÜ-Systeme) sollen unter Normalbedingungen einen hohen Isolationswiderstand aufweisen, der sich aber, wenn Raumladungen abzuführen sind, bedarfsweise auf einen niedrigeren Isolationswiderstand absenken lässt.

In WO 00/74191 A1 ist ein Verfahren zur geometrischen Kontrolle des elektrischen Feldes in Kabelmuffen oder Kabelendverschlüssen von HGÜ-Systemen beschrieben, bei dem eine resistiv feldsteuernde Schicht eines Kabels Kontakt mit einem Stress-Konus aufweist, der im Bedarfsfalle an den leitenden Kabelenden das elektrische Feld über einen weiten Bereich gleichmäßiger verteilen kann und somit lokale Überlastungen (z.B. Feldspitzen, Feldüberhöhungen, Raumladungen) verringert oder vermeidet.

Geometrische Feldsteuerelemente für Kabelmuffen oder Kabelendverschlüsse sind auch aus der Patentliteratur für Wechselstrom-Hochspannungssysteme (nachfolgend: AC-Systeme) bekannt und beispielsweise in DE 197 46 313 A1 beschrieben. Sie stellten über lange Zeit ein probates Mittel zur Kontrolle von Feldüberhöhungen zwischen dem Ende der Isolationsschicht des Kabels und dem freigelegten elektrischen Leiter in der Kabelmuffe dar, verhindern aber nicht die oben beschriebenen Probleme, die im Isolationskörper selbst auftreten können.

Kabelgarnituren werden oft überwiegend aus Elastomeren hergestellt. Diese erlauben es, beispielsweise Kabelmuffen mittels eines Aufschiebe- oder Aufschrumpfverfahrens auf den zu verbindenden Kabelenden aufzubringen. Bei deren Montage ist eine Aufdehnung des Bauteils um 15 bis 35% seiner äußeren Abmaße unter vollständiger Rückverformbarkeit nötig um den Aufschiebevorgang erfolgreich abschließen zu können. Kabelgarnituren, die aus vielen verschiedenen Materialien und starren Einbauten bestehen, können bei diesem Montagevorgang durch unterschiedliche Ausdehnungsneigung der einzelnen Bestandteile und Verschiebungen von Einbauten beim Ausdehnen Schaden an ihrer Wirksamkeit nehmen. Auch die Grenzflächen der einzelnen Schichten der in der Regel mehrschichtig aufgebauten Kabelgarnituren werden durch den Aufdehnungsprozess genauso wie durch hohe Betriebstemperaturen von bis zu 95°C in Mitleidenschaft gezogen und in ihrer Wirksamkeit beeinträchtigt. So können beispielsweise Lufteinschlüsse zwischen einer Leitschicht und einer Isolationsschicht Teilentladungen bewirken.

Es hat daher nicht an Versuchen gefehlt, Kabelgarnituren für die Hochspannungs-Gleichstrom-Übertragung zur Verfügung zu stellen, die im Wesentlichen aus einem elastomeren Material bestehen und in denen eine wirksame Feldkontrolle nicht über geometrische Einbauten erfolgt.

So ist aus EP 2 026 438 A1 eine HGÜ-Kabelmuffe bekannt, die einen elektrisch isolierenden Körper aufweist, in den eine feldsteuernde Schicht zumindest teilweise eingearbeitet ist, wobei die feldsteuernde Schicht in bestimmten Teilbereichen eine Verdickung aufweist. Der elektrisch isolierende Körper besteht dabei aus einem Elastomer, welches EPDM (Ethylen-Propylen-Dien-Monomer) oder ein Silikonelastomer sein kann. In die feldsteuernde Schicht, deren Matrix ebenfalls aus EPDM oder Silikonelastomer zusammengesetzt sein kann, ist ein feldsteuerndes Material mit nicht linearen feldsteuernden Eigenschaften eingearbeitet, welches aus ZnO- oder SiC-Partikeln besteht.

Auch aus WO 2016/096276 A1 ist eine HGÜ-Kabelmuffe bekannt, die mehrschichtig aufgebaut ist und sowohl eine isolierende Schicht als auch eine feldsteuernde Schicht aufweist, wobei die feldsteuernde Schicht ein nichtlinear feldsteuerndes partikuläres Material enthält. Letzteres besteht entweder aus bekannten kugelförmigen ZnO-Mikrovaristorpartikeln, die mit verschiedenen Metalloxiden wie beispielsweise $Sb_2O_3$, $Bi_2O_3$, $Cr_2O_3$ oder $Co_3O_4$ dotiert und anschließend gesintert wurden, oder aus Siliziumcarbid-Partikeln (SiC). Dabei können die isolierende Schicht und die Matrix der feldsteuernden Schicht aus verschiedenen Elastomeren bestehen.

Die genannten ZnO-Mikrovaristor-Partikel weisen ein hohes spezifisches Gewicht auf und sind daher in den zu vernetzenden elastomeren Vorläuferverbindungen schwer zu verarbeiten, weil sie während des Verarbeitungsprozesses in der noch unvernetzten Masse absinken und sich daher nicht gleichmäßig in dieser verteilen lassen, sodass eine Gradientenbildung in der entstehenden feldsteuernden Schicht kaum zu vermeiden ist. Darüber hinaus weist auch das so gefüllte Bauteil ein höheres Gewicht auf. SiC-Partikel haben zwar ein geringeres spezifisches Gewicht, weisen aber gegenüber den ZnO-Mikrovaristorpartikeln deutlich schlechter einstellbare feldsteuernde Eigenschaften auf. Außerdem sind in den vorab beschriebenen Patentschriften jeweils eine rein isolierende und zusätzlich eine feldsteuernde Schicht notwendig um die gewünschten isolierenden und feldsteuernden Eigenschaften gewährleisten zu können. Da aber, wie vorab bereits beschrieben wurde, Grenzflächen zwischen verschiedenen Schichten in Kabelgarnituren generell für Schwachstellen anfällig sind und letztere Leistungsverminderungen hinsichtlich der elektrisch isolierenden Eigenschaften zur Folge haben können, wäre es vorteilhaft, Kabelgarnituren zur Verfügung zu haben, die solche Schwachstellen im Aufbau und in der Verarbeitbarkeit nur vermindert aufweisen.

Die Aufgabe der vorliegenden Erfindung besteht demzufolge darin, eine HGÜ-Kabelgarnitur zur Verfügung zu stellen, die die beschriebenen Nachteile hinsichtlich Verarbeitbarkeit und Wirksamkeit von isolierenden und feldsteuernden Elementen nicht aufweist und auf wirtschaftliche Weise unter Verwendung der bekannten elastomeren Matrixmaterialien hergestellt werden kann.

Eine weitere Aufgabe der Erfindung besteht darin, ein Verfahren zur Herstellung einer elektrisch isolierenden Schicht einer HGÜ-Kabelgarnitur bereitzustellen, welche gleichzeitig elektrisch isolierende und feldsteuernde Eigenschaften aufweist.

Darüber hinaus besteht eine zusätzliche Aufgabe der Erfindung darin, die Verwendung einer wie vorab hergestellten elektrisch isolierenden Schicht aufzuzeigen.

Die Aufgabe der vorliegenden Erfindung wird gelöst durch eine Kabelgarnitur für HGÜ-Kabel, umfassend einen Formkörper, welcher mehrschichtig aufgebaut ist und eine elektrisch isolierende Schicht aufweist, die ein Elastomer und einen feldsteuernden partikulären Füllstoff umfasst, wobei es sich bei dem feldsteuernden partikulären Füllstoff um Metalloxid enthaltende Kern-Schale-Partikel handelt.

Des Weiteren wird die Aufgabe der Erfindung auch durch ein Verfahren zur Herstellung einer elektrisch isolierenden Schicht einer HGÜ-Kabelgarnitur gelöst, wobei

- eine unverfestigte Elastomer-Vorläuferzusammensetzung, ein Vernetzungsmittel, ein feldsteuernder partikulärer Füllstoff, welcher Metalloxid enthaltende Kern-Schale-Partikel enthält, sowie optional weitere Additive homogen miteinander vermischt werden, sodass eine Isolierschicht-Vorläuferzusammensetzung erhalten wird,
- die Isolierschicht-Vorläuferzusammensetzung in einen Hohlkörper eingebracht wird, welcher einen Hohlraum mit einer äußeren Form aufweist, die der Form der elektrisch isolierenden Schicht einer Kabelgarnitur entspricht, und
- die Isolierschicht-Vorläuferzusammensetzung durch Stehenlassen oder Zufuhr von Wärme und/oder aktinischer Strahlung vernetzend verfestigt und die dabei gebildete Isolierschicht aus dem Hohlkörper entfernt wird.

Darüber hinaus wird die Aufgabe der Erfindung auch durch die Verwendung der vorab hergestellten elektrisch isolierenden Schicht als isolierende Schicht in einer HGÜ-Kabelgarnitur gelöst, wobei es sich um eine Kabelmuffe, einen Kabelendverschluss, einen Kabelstecker oder eine Kabeldurchführung handelt.

HGÜ-Kabelgarnituren, unabhängig davon, ob es sich um Kabelmuffen, Kabelendverschlüsse, Kabelstecker oder Kabeldurchführungen handelt, sind in der Regel mehrschichtig aufgebaute Formkörper und weisen, von der Kabeloberfläche bzw. der Innenseite der Kabelgarnitur aus betrachtet, zumeist einen Isolierkörper und eine äußere Leitschicht (Erdpotential) auf. Im Falle einer geometrischen Feldsteuerung sind zudem häufig elektrisch leitfähige Deflektoren eingebaut.

Bei den oben beschriebenen Kabelgarnituren gemäß EP 2 026 438 A1 und WO 2016/096276 A1 wird die feldsteuernde Aufgabe der Deflektoren dagegen von jeweils einer feldsteuernden Schicht übernommen, die direkt auf dem Isolierkörper (der Isolationsschicht) aufgebracht ist und feldsteuernde partikuläre Materialien enthält.

Im Gegensatz zu diesen Ausführungsformen des Standes der Technik weist die erfindungsgemäße HGÜ-Kabelgarnitur lediglich mindestens eine elektrisch isolierende Schicht und eine äußere Leitschicht auf, wobei die elektrisch isolierende Schicht ein Elastomer und einen feldsteuernden partikulären Füllstoff umfasst und es sich bei letzterem um Metalloxid enthaltende Kern-Schale-Partikel handelt. Überraschend haben die Erfinder der vorliegenden Erfindung gefunden, dass auf den Einbau von elektrisch leitfähigen Deflektoren oder einer separaten feldsteuernden Schicht zusätzlich zu einer isolierenden Schicht in HGÜ-Kabelgarnituren verzichtet werden kann, wenn die isolierende Schicht selbst einen feldsteuernden partikulären Füllstoff bestimmter Zusammensetzung in homogener Verteilung enthält. Daher weist die erfindungsgemäße Kabelgarnitur zusätzlich zu der erfindungsgemäßen elektrisch isolierenden Schicht vorzugsweise weder feldsteuernde elektrisch leitfähige Einbauten (z.B. Deflektoren) noch eine separate feldsteuernde Schicht auf. Weitere Bestandteile einer HGÜ-Kabelgarnitur, die beispielsweise aus zusätzlichen mechanischen Schutzschichten, Feuchtigkeitssperren etc. bestehen und fachüblich sind, sollen hier weder beschrieben noch genauer erläutert werden, weil deren Einbau in eine HGÜ-Kabelgarnitur dem allgemeinen Fachwissen des Fachmannes entspricht und diese daher entsprechend fachgemäß bedarfsweise ergänzt werden können.

Im Folgenden wird daher lediglich die erfindungsgemäß zusammengesetzte elektrisch isolierende Schicht einer HGÜ-Kabelgarnitur näher beschrieben.

Die elektrisch isolierende Schicht der erfindungsgemäßen HGÜ-Kabelgarnitur enthält im Wesentlichen ein elastomeres Material sowie einen feldsteuernden partikulären Füllstoff, bei dem es sich um Metalloxid enthaltende Kern-Schale-Partikel handelt. Dabei ist das feldsteuernde partikuläre Material erfindungsgemäß homogen in dem elastomeren Material verteilt.

Bei dem elastomeren Material handelt es sich vorzugsweise um Elastomere, die üblicherweise für die Isolierkörper bzw. Isolierschichten von Kabelgarnituren eingesetzt werden, also um einen geeigneten Silikonkautschuk, aber auch um ein Polyurethan oder EPDM.

Vorzugsweise wird Silikonkautschuk verwendet, da dieses Material in Bezug auf seine Dehnbarkeit, Elastizität, Reißfestigkeit und Gasdurchlässigkeit große Vorteile insbesondere für HGÜ-Kabelgarnituren, die in Aufschiebetechnik auf die entsprechenden HGÜ-Kabel aufgebracht werden sollen, aufweist. Außerdem gleichen elektrisch isolierende Schichten auf Silikonbasis Temperaturschwankungen und Unebenheiten auf der Kabeladeroberfläche wirksamer aus als beispielsweise elektrisch isolierende Schichten auf Basis von EPDM.

Insbesondere handelt es sich bei dem Silikonkautschuk um einen bei niederer Temperatur (ab Raumtemperatur bis < 200°C, zweikomponentig) vernetzten Silikonkautschuk, welcher als RTV2-Silikon bezeichnet wird, um einen bei höheren Temperaturen vernetzten Silikonkautschuk (ab ca. 110°C, zweikomponentig, bzw. ab ca. 160°C, einkomponentig), welcher als HTV-Silikon bezeichnet wird, oder um einen flüssig vernetzten Silikonkautschuk (ab ca. 110°C, zweikomponentig), welcher als LSR-Silikon bezeichnet wird.

Entsprechende Materialien werden für Kabelgarnituren, auch im HGÜ-Bereich, bereits eingesetzt und sind kommerziell erhältlich, beispielsweise von den Firmen Wacker Chemie, Momentive oder Dow Corning, Inc.

Es handelt sich dabei um reaktive Silikonverbindungen, die meistens mit Platinkomplexen als Katalysatoren polymerisiert werden, wobei den Ausgangsverbindungen zum Zwecke der Polymerisation siliziumorganische Verbindungen als Vernetzer und bedarfsweise auch Hilfsstoffe wie Inertfüllstoffe, Farbpigmente, verstärkende Füllstoffe oder andere spezielle Additive zugegeben werden können. Eine Übersicht über geeignete Silikonkautschukverbindungen ist J. Ackermann, V. Damrath, Chemie und Technologie der Silicone II, Chemie in unserer Zeit, 23. Jahrgang 1989, Nr. 3, S. 86-99, VCH Verlagsgesellschaft mbH, Weinheim, oder auch B. Pachaly, F. Achenbach et.al., Silicone; aus Winnacker/-Küchler: Chemische Technik: Prozesse und Produkte, Band 5, S. 1095-1213, Weinheim, WILEY VCH, 2005, zu entnehmen.

Erfindungsgemäß werden als partikulärer feldsteuernder Füllstoff Metalloxid enthaltende Kern-Schale-Partikel eingesetzt. Voraussetzung für die feldsteuernden Eigenschaften dieser Partikel ist es, dass entweder der Kern oder die Schale oder der Kern und die Schale dieser Partikel mindestens ein elektrisch leitfähiges oder elektrisch halbleitfähiges Metalloxid enthält.

Bei den elektrisch leitfähigen oder elektrisch halbleitfähigen Metalloxiden kann es sich um dotierte Metalloxide, Metallsuboxide oder um sauerstoffdefizitäre Metalloxide handeln.

Als Metalle für elektrisch leitfähige oder halbleitfähige Metalloxide, d.h. Oxide, Mischoxide oder Oxidgemische, werden insbesondere Zink, Zinn, Germanium, Titan, Gallium, Indium, Antimon, Silizium, Wolfram, Molybdän, Blei, Cadmium, Kalzium, Strontium, Barium, Kupfer und Rhenium eingesetzt.

Die Metalloxide können einzeln oder als phasenreines Mischoxid mit einem oder mehreren aus der Gruppe, bestehend aus Antimon, Indium, Wolfram, Molybdän, Chrom, Kobalt, Mangan, Eisen, Cadmium, Gallium, Germanium,

EP 3 642 923 B1

Zinn, Vanadium, Niob, Tantal, Cer, Scandium, Lanthan, Yttrium, Bismuth, Titan, Kupfer, Kalzium, Strontium, Barium, Aluminium, Arsen, Phosphor, Stickstoff, Bor, Fluor und Chlor dotiert werden.

In der Regel ist das Metall des Metalloxids und die Dotierelemente nicht identisch. In besonderen Fällen können aber auch gleiche Metallzentren mit unterschiedlichen Oxidationsstufen in einem dotierten Metalloxid oder Metallmischoxid vorliegen.

Besonders bevorzugt werden als Metalloxide Zinnoxid, Zinkoxid, Indiumoxid und/oder Titanoxid, insbesondere Titandioxid, eingesetzt. Als Dotierstoffe werden vorzugsweise Aluminium, Indium, Fluor, Wolfram, Zinn und/oder Antimon, Chrom, Kobalt, Vanadium, Niob und Tantal eingesetzt. Zur weiteren Einstellung der Eigenschaften des Materials können noch Zuschlagstoffe wie Bismuth, Cer, Bor, Chrom, Silizium, Strontium, Barium oder Kalzium zugesetzt werden.

Der Anteil der Dotierstoffe im elektrisch leitfähigen oder halbleitfähigen Kern oder in der elektrisch leitfähigen oder halbleitfähigen Schale der Kern-Schale-Partikel kann 0,01 bis 30 Gew.%, jeweils bezogen auf das Gewicht des Kerns oder der Schale, betragen. Besonders bevorzugt werden mit Antimon dotiertes Zinnoxid, mit Wolfram dotiertes Zinnoxid, mit Zinn dotiertes Indiumoxid, mit Aluminium dotiertes Zinkoxid oder mit Fluor und/oder Phosphor dotiertes Zinnoxid eingesetzt. Aber auch mit Niob oder Tantal, Molybdän oder Wolfram und weiteren Übergangselementen dotiertes Titanoxid findet vorteilhafterweise seine Anwendung als halbleitfähiges Material. Dabei bestimmt der prozentuale Anteil der Dotierung die Stärke der elektrisch leitfähigen oder elektrisch halbleitfähigen Eigenschaften. Je geringer der Anteil des Dotierelementes, umso geringer ist die zu erwartende elektrische Leitfähigkeit. So kann mit derselben Metalloxid/Dotierelement-Kombination eine Einstellung der elektrisch leitfähigen Eigenschaften des Kerns oder der Schale von deutlich halbleitend zu stark elektrisch leitend variiert werden. Über die weiteren, vorab genannten Zuschlagstoffe und die Glühbedingungen können die nichtlinearen elektrischen Eigenschaften der Materialien eingestellt werden.

Der erfindungsgemäße Einsatz von Kern-Schale-Partikeln erlaubt eine fein justierte Einstellung der elektrisch leitenden Eigenschaften des partikulären Füllmaterials in der elektrisch isolierenden Schicht der HGÜ-Kabelgarnitur. Die oben beschriebenen Metalloxide erlauben die Einstellung der elektrisch leitenden Eigenschaften im Kern oder in der Schale. Kern oder Schale können jedoch auch aus dielektrischem Material bestehen, wenn der jeweils andere Teil des Partikels aus einem elektrisch leitfähigen oder halbleitfähigen Material besteht. So ist beispielsweise der Einsatz von Kern-Schale-Partikeln vorteilhaft, bei denen der Kern aus einem dielektrischen Material besteht, welches beispielsweise aus $SiO_2$, $TiO_2$, $Al_2O_3$, Glas oder synthetischen oder natürlich vorkommenden Alumosilikaten wie Mullit, Perlit, Bimsstein, Flugasche, oder Schichtsilikaten wie natürlichem oder synthetischem Glimmer, Talk, Sericit oder Gemischen aus mindestens zwei von diesen ausgewählt ist, während die Schale ein elektrisch leitfähiges oder halbleitfähiges Metalloxid wie vorab beschrieben enthält. Ebenso können elektrisch leitfähige Kerne, die aus Partikeln der vorab beschriebenen elektrisch leitfähigen oder halbleitfähigen Metalloxide bestehen, mit einer Schale aus einem dielektrischen Material wie $SiO_2$, $Al_2O_3$, $TiO_2$ oder aus Polymeren wie PVDF (Polyvinyldifluorid) oder polymeren funktionellen Siloxanen umgeben sein, die den Kern-Schale-Partikeln eine intrinsische elektrische Leitfähigkeit verleiht, ohne dass die Kern-Schale-Partikel als Pulver selbst elektrisch leitfähig sein müssen.

Darüber hinaus erlaubt der Aufbau der erfindungsgemäß eingesetzten Kern-Schale-Partikel auch die zielgerichtete Steuerung des spezifischen Gewichts der Einzelpartikel, was insbesondere für die Verarbeitungseigenschaften bei der Herstellung der Isolierschicht bzw. des Isolierkörpers der HGÜ-Kabelgarnitur von Vorteil ist und beispielsweise die homogene Verteilung der Kern-Schale-Partikel im Elastomer erst ermöglicht. So werden erfindungsgemäß vorzugsweise Kern-Schale-Partikel ausgewählt, deren spezifisches Gewicht geringer ist als 5 g/cm$^3$, insbesondere geringer als 4 g/cm$^3$. Gegenüber den im Stand der Technik verwendeten ZnO-Mikrovaristoren haben diese den Vorteil, dass ihre Absetzneigung in der noch nicht ausgehärteten (vernetzten) Isolierschicht-Vorläuferzusammensetzung beim Herstellungsprozess deutlich geringer ist, sodass sie homogen in diese eingearbeitet werden können und diese homogene Verteilung trotz der mechanischen Beanspruchung der unvernetzten Isolierschicht-Vorläuferzusammensetzung während des Herstellungsprozesses der Kabelgarnitur auch nach deren Vernetzung erhalten bleibt. Zudem wird das Gewicht des fertigen Bauteils gegenüber einem mit dem gleichen Volumenanteil an ZnO-Mikrovaristoren gefüllten Bauteil deutlich reduziert.

Besonders gut lassen sich vorteilhafte elektrisch leitfähige Eigenschaften der erfindungsgemäß eingesetzten Kern-Schale-Partikel mit einem vorteilhaften spezifischen Gewicht verbinden, wenn der Kern der Partikel aus einem dielektrischen Material besteht und die Schale mindestens ein elektrisch leitfähiges oder halbleitfähiges Metalloxid enthält. Hier lassen sich partikuläre Kerne mit geringem spezifischen Gewicht einsetzen, die kommerziell günstig erhältlich und chemisch inert sind, beispielsweise Partikel aus $SiO_2$, $TiO_2$, $Al_2O_3$, Glas, oder besonders bevorzugt aus synthetischen oder natürlich vorkommenden Alumosilikaten wie Mullit, Perlit, Bimsstein, Flugasche, oder Schichtsilikaten wie natürlichem oder synthetischem Glimmer, Talk, Sericit oder Gemischen aus mindestens zwei von diesen. Werden diese als Kerne der Kern-Schale-Partikel eingesetzt, ergeben sich für die Ausgestaltung der materiellen und elektrisch leitfähigen Eigenschaften der Schale breite Variationsmöglichkeiten, ohne dass ein zu hohes spezifisches Gewicht der finalen Kern-Schale-Partikel zu unerwünschten Verarbeitungseigenschaften bei der Herstellung der Isolationsschichten von Kabelgarnituren führen würde.

Die erfindungsgemäß eingesetzten Kern-Schale-Partikel können unterschiedliche Formen aufweisen, d.h. es sind sowohl sphärische, plättchenförmige oder nadelförmige Partikel wie auch unregelmäßig geformte Partikel oder

5

Gemische aus zwei oder mehreren von diesen geeignet.

Die Form der Kern-Schale-Partikel richtet sich dabei weitestgehend nach der Form des jeweiligen partikulären Kern-Materials. So weisen beispielsweise Kern-Schale-Partikel, die auf plättchenförmigem Glimmer oder Talk als Kern basieren, eine Plättchenform auf, da die Schale der Kern-Schale-Partikel den Kern haftfest umschließt und meist als weitestgehend gleichmäßige Beschichtung auf dem Kern ausgebildet ist, sodass die Form des Kernmaterials auch der äußeren Form der Kern-Schale-Partikel entspricht.

Die Partikelgröße der Kern-Schale-Partikel liegt im Bereich von 0,1 bis 150 $\mu$m, vorzugsweise im Bereich von 0,5 bis 100 $\mu$m und insbesondere im Bereich von 1 bis 80 $\mu$m. Als Partikelgröße wird erfindungsgemäß die größte longitudinale Ausdehnung der Einzelpartikel betrachtet.

Die Partikelgröße kann dabei mit üblichen Methoden zur Partikelgrößenbestimmung ermittelt werden. Insbesondere bevorzugt ist ein Verfahren zur Partikelgrößenbestimmung nach der Laserdiffraktionsmethode, bei der vorteilhafterweise sowohl die nominale Partikelgröße der Einzelpartikel als auch deren prozentuale Partikelgrößenverteilung bestimmt werden kann. Hierfür stehen Messgeräte verschiedener Firmen zur Verfügung, beispielsweise ein Mastersizer 3000 der Firma Malvern Instruments Ltd. oder ein Accusizer 780 der Firma Agilent Technologies. Alle in der vorliegenden Erfindung durchgeführten Partikelgrößenbestimmungen werden gemäß der Laserdiffraktionsmethode mit einem Gerät vom Typ Malvern Mastersizer 3000 der Firma Malvern Instruments Ltd., UK, nach Standardbedingungen der ISO/DIS 13320 bestimmt.

Ist die Form der eingesetzten Kern-Schale-Partikel plättchenförmig, weisen die entsprechenden Partikel eine Dicke im Bereich von 0,01 bis 5 $\mu$m, insbesondere von 0,05 bis 4,5 $\mu$m, auf. Der Formfaktor der plättchenförmigen Partikel (Verhältnis von Durchmesser respektive Partikelgröße zu Dicke) beträgt 2:1 bis 2000:1, insbesondere 5:1 bis 200:1.

Weisen die Kern-Schale-Partikel einen dielektrischen Kern und eine Schale in Form einer Beschichtung aus einem elektrisch leitfähigen oder halbleitfähigen Metalloxid auf, so beträgt die Dicke der Schale (Beschichtung) auf dem Kern in der Regel 10 bis 200 nm, vorzugsweise 20 bis 50 nm. Der Gewichtsanteil der Schale kann 30 bis 200 Gew.%, vorzugsweise 50 bis 150 Gew.% betragen, bezogen auf das Gewicht des Kerns.

Die erfindungsgemäß zur Feldsteuerung in der elektrisch isolierenden Schicht einer HGÜ-Kabelgarnitur eingesetzten Kern-Schale-Partikel weisen, je nach ihrer materiellen Zusammensetzung, eine elektrische Leitfähigkeit, eine intrinsische elektrische Leitfähigkeit oder halbleitende Eigenschaften auf.

Da die isolierende Schicht bzw. der isolierende Formkörper, die (der) das Elastomer und die Kern-Schale-Partikel enthält, insgesamt elektrisch isolierende Eigenschaften aufweisen soll liegt es auf der Hand, dass insbesondere elektrisch leitfähige Kern-Schale-Partikel in der Schicht (dem Formkörper) nicht in einer Konzentration oberhalb der Perkolationsschwelle eingesetzt werden dürfen.

Bei der Perkolationsschwelle eines Systems von elektrisch leitfähigen Partikeln in einer dielektrischen Matrix handelt es sich um einen engen Konzentrationsbereich für die elektrisch leitfähigen Partikel, in dem sich die elektrisch leitenden Eigenschaften der Matrix sprunghaft verändern, d.h. das Gesamtsystem durch Ausbildung von Leitpfaden bei geringer Konzentrationssteigerung an elektrisch leitfähigen Partikeln sprunghaft zu einer um Potenzen erhöhten elektrischen Leitfähigkeit gelangt.

Um den Isolationswiderstand der elektrisch isolierenden Schicht in der erfindungsgemäßen HGÜ-Kabelgarnitur auf einen Wert einzustellen, der im Stressfall im Bereich von etwa $10^8$ bis $10^{12}$ Ohm*cm liegt, können elektrisch leitfähige Kern-Schale-Partikel im Elastomer nur in einer geringen Konzentration deutlich unterhalb der Perkolationsschwelle eingesetzt werden, nämlich im Bereich von 0,1 bis 10 Vol.%, vorzugsweise von 0,5 bis 6 Vol.%, bezogen auf das Volumen der Isolationsschicht bzw. des Isolationskörpers.

Für intrinsisch leitfähige oder halbleitfähige Kern-Schale-Partikel sind höhere Konzentrationen erlaubt und vorteilhaft, so im Bereich von 0,1 bis 25 Vol.% für intrinsisch leitfähige Kern-Schale-Partikel und im Bereich von 0,1 bis 25 Vol.%, insbesondere von 0,5 bis 15 Vol.%, für halbleitfähige Kern-Schale-Partikel.

Im Allgemeinen beträgt die Konzentration der Kern-Schale-Partikel im Elastomer 0,1 bis 25 Vol.%, vorzugsweise 0,5 bis 20 Vol.% und insbesondere 1 bis 15 Vol.%, bezogen auf das Volumen der Isolationsschicht bzw. des Isolationskörpers.

Sofern im Elastomer keine weiteren festen Teilchen vorhanden sind, kann die Konzentration der Kern-Schale-Partikel als Pigment-Volumen-Konzentration ausgewiesen werden. Letztere stellt das Verhältnis des Gesamtvolumens von Pigmenten und/oder Füllstoffen und/oder anderen, nicht filmbildenden festen Teilchen in einem Produkt zum Gesamtvolumen der nichtflüchtigen Anteile, ausgedrückt in Prozent, dar.

Besonders bevorzugt werden erfindungsgemäß halbleitfähige Kern-Schale-Partikel eingesetzt, die einen spezifischen Pulverwiderstand im Bereich von $10^6$ Ohm*cm bis $10^{12}$ Ohm*cm aufweisen. Bevorzugt weisen die halbleitfähigen Kern-Schale-Partikel einen spezifischen Pulverwiderstand im Bereich von $10^8$ bis $10^{12}$ Ohm*cm auf, wobei sich die angegebenen Werte auf eine angelegte Messspannung von 100 V beziehen. Wie die oben genannten elektrisch leitfähigen oder intrinsisch leitfähigen Pigmente auch, können sie einzeln oder als Mischungen verschieden zusammengesetzter Kern-Schale-Partikel eingesetzt werden, die beispielsweise jeweils einen voneinander verschiedenen spezifischen Pulverwiderstand aufweisen, sodass eine Feineinstellung der gewünschten Ableiteigenschaften in der isolierenden Schicht durch Mischen von Kern-Schale-Partikeln auf einfache Weise gewährleistet werden kann.

Auch die halbleitfähigen Kern-Schale-Partikel werden vorzugsweise in einer Konzentration unterhalb der Perkolationsschwelle eingesetzt.

Die elektrischen Eigenschaften der Kern-Schale-Partikel werden durch den spezifischen Pulverwiderstand charakterisiert. Zur Messung des spezifischen Widerstandes eines Pigmentpulvers wird ein Acrylglas-Rohr mit einem Innendurchmesser von 2 cm mit einer geringen Menge des Pigmentpulvers (ca. 0,5 bis 3 g) gefüllt, das erfindungsgemäß durch die genannten Kern-Schale-Partikel gebildet wird, und mit Hilfe eines Gewichtes von 10 kg mit einem Metallstempel gegen eine Metallelektrode zusammengepresst. Aus der Schichtdicke L des komprimierten Pulvers ergibt sich der spezifische Widerstand $\rho$ nach der folgenden Beziehung:

$$\rho = R^* \ \pi^*(d/2)^2/L \ \ (Ohm^*cm).$$

Dabei stellt R den tatsächlich gemessenen elektrischen Widerstand bei einer Messspannung von 100 V und d den Durchmesser der Pigmentsäule dar.

Die erfindungsgemäß eingesetzten Kern-Schale-Partikel können an ihrer Oberfläche noch zusätzlich mit einer organischen oder anorganischen Nachbeschichtung versehen sein, die die Einarbeitungseigenschaften der Kern-Schale-Partikel in das Elastomer verbessern soll. Beispielsweise kann die Oberfläche der Kern-Schale-Partikel mit einer dünnen Beschichtung aus organischen Silanen oder amphiphilen Tensiden versehen sein. Dabei stellt die Oberflächenbeschichtung jedoch nur einen Anteil von höchstens 5 Gew.%, bezogen auf das Gesamtgewicht der Kern-Schale-Partikel, dar und beeinträchtigt die elektrische Leitfähigkeit der Kern-Schale-Partikel nur wenig und vorzugsweise gar nicht.

Geeignete elektrisch leitfähige, intrinsisch leitfähige oder halbleitfähige Kern-Schale-Partikel sind kommerziell erhältlich und werden beispielsweise von der Merck KGaA, Deutschland, in großer Auswahl unter der Bezeichnung Iriotec® angeboten. Davon haben sich Kern-Schale-Partikel, die unter der Bezeichnung Iriotec® 73xx (xx= 10, 15, 20, 25, 30, 40) und Iriotec® 75xx (xx= 10, 50) angeboten werden, als besonders geeignet herausgestellt.

Die isolierende Schicht des Formkörpers der erfindungsgemäßen HGÜ-Kabelgarnitur weist einen spezifischen Durchgangswiderstand im Bereich von $10^8$ bis $10^{13}$ Ohm*cm, insbesondere im Bereich von $10^{10}$ bis $10^{12}$ Ohm*cm auf.

Bei Werten unterhalb $10^7$ Ohm*cm wäre die elektrische Leitfähigkeit der Isolierschicht zu hoch, sodass es schon im Normalbetrieb zu hohen Verlustleistungen über den Isolator kommen würde, womit auch eine Erwärmung und Schädigung der Isolationsschicht verbunden wäre. Im Gegensatz dazu ist bei Durchgangswiderständen von größer als $10^{13}$ Ohm*cm die Isolationswirkung der Schicht so hoch wie sie von der reinen Matrix zu erwarten wäre. Entstehende Raumladungen könnten dann nicht mehr abgeführt werden.

Der spannungsabhängige spezifische Durchgangswiderstand $\rho$ einer Schicht wird gemäß DIN IEC 60093 und DIN EN 61340-2-3: 2000 mit Hilfe einer Ringelektrode (mittlerer Ringdurchmesser d) an einem 1 mm dicken (L) planen Probekörper gemessen, wobei der Probekörper zwischen zwei speziellen Messsonden platziert und bei angelegter Messspannung der Widerstand (R) indirekt über den Stromfluss durch den Probekörper und einen in Reihe geschalteten, definierten Messwiderstand (Shunt) ermittelt wird. Für den spezifischen Durchgangswiderstand gilt folgende Gleichung:

$$\rho = R^* \ \pi^*(d/2)^2/L \ \ (Ohm^*cm).$$

Gegenstand der vorliegenden Erfindung ist auch ein Verfahren zur Herstellung einer elektrisch isolierenden Schicht einer Kabelgarnitur, wobei

- eine unverfestigte Elastomer-Vorläuferzusammensetzung, ein Vernetzungsmittel, ein feldsteuernder partikulärer Füllstoff, welcher Metalloxid enthaltende Kern-Schale-Partikel enthält, sowie optional weitere Additive homogen miteinander vermischt werden, sodass eine Isolierschicht-Vorläuferzusammensetzung erhalten wird,
- die Isolierschicht-Vorläuferzusammensetzung in einen Hohlkörper eingebracht wird, welcher einen Hohlraum mit einer äußeren Form aufweist, die der Form der elektrisch isolierenden Schicht einer Kabelgarnitur entspricht, und
- die Isolierschicht-Vorläuferzusammensetzung durch Stehenlassen oder Zufuhr von Wärme und/oder aktinischer Strahlung vernetzend verfestigt und die dabei gebildete Isolierschicht aus dem Hohlkörper entfernt wird.

In der Regel werden elektrisch isolierende Schichten für Kabelgarnituren, die in der Matrix aus Elastomeren bestehen, in einem Spritzgussverfahren, wobei es sich bei zweikomponentigen Ausgangsstoffsystemen um ein reaktives Spritzgussverfahren handelt, (RIM-Verfahren, Reaction Injection Molding) hergestellt. Dabei werden geeignete Ausgangsstoffe für Elastomere miteinander gemischt, in flüssiger Form in einen Hohlkörper (die Spritzgießform) eingebracht und dort vernetzen gelassen. Nach dem Vernetzungsprozess können sie der Gießform entnommen und baulich vervollständigt werden.

In dieser Weise werden auch die elektrisch isolierenden Schichten der erfindungsgemäßen Kabelgarnitur hergestellt. Durch die Anwendung des Spritzgussverfahrens wird die elektrisch isolierende Schicht der Kabelgarnitur selbst als Formkörper ausgebildet.

Vorzugsweise werden als Ausgangsstoffe für das Elastomer Silikonverbindungen verwendet, die den Silikonharz-Typen RTV2-, LSR- oder HTV-Silikone zuzuordnen sind. Die entsprechenden reaktionsfähigen Silikonverbindungen werden zu diesem Zwecke bei zweikomponentigen Systemen mit Vernetzungsmitteln, bei denen es sich meist ebenfalls um (kurzkettige) Silikonverbindungen handelt, sowie gegebenenfalls mit Katalysatoren und weiteren Additiven, beispielsweise mit Inertfüllstoffen, gemischt, diese Mischung im flüssigen Zustand in den Hohlraum einer Spritzgießform eingetragen und unter den jeweiligen Bedingungen vernetzen gelassen. Die dazu nötigen Bedingungen wie Temperatur, Druck und Reaktionszeit sind dem Fachmann bekannt und werden entsprechend der Ausgangsstoffe und der gewünschten finalen Elastomere ausgewählt. Bei einkomponentigen Systemen entfällt dagegen die separate Zugabe eines Vernetzungsmittels. Der Vernetzungsprozess kann durch die Zufuhr aktinischer Strahlung, beispielsweise durch UV- oder Gammastrahlung, beschleunigt werden.

Bei Bedarf kann der Hohlraum der Spritzgießform auch an definierter Stelle feste Bauteile in Form von Einliegern aufweisen, die mit der Isolierschicht-Vorläuferzusammensetzung umgossen werden.

Während des Vernetzungsprozesses wird die Isolierschicht-Vorläuferzusammensetzung, die ein Gemisch der reaktionsfähigen Elastomer-Vorläuferzusammensetzung mit einem Vernetzer und gegebenenfalls weiteren Additiven (vorzugsweise mindestens mit einem die Vernetzung beschleunigenden Katalysator) darstellt, durch Vernetzung verfestigt und in dieser Weise in den elastomeren Festkörper überführt, der bei vorgegebenen Temperaturen und nach einer festgelegten Standzeit als Formkörper der Gießform entnommen werden kann.

Die Gesamtheit der Ausgangsstoffe für die Herstellung der erfindungsgemäßen Isolierschicht wird hier als Isolierschicht-Vorläuferzusammensetzung bezeichnet. Die Hauptbestandteile der Ausgangsstoffe für die Herstellung des Elastomers (ohne Vernetzer und Katalysator) werden als Elastomer-Vorläuferzusammensetzung bezeichnet.

In der vorliegenden Erfindung werden den üblichen Ausgangsstoffen zur Erzeugung der Elastomere vor dem Eintrag in den Hohlraum der Gießform noch feldsteuernde partikuläre Füllstoffe in Form von Kern-Schale-Partikeln zugegeben, die in diesem Gemisch homogen verteilt werden und in dieser Verteilung auch während des Eintrags in die Gießform gehalten werden. Die entstehende Mischung ist die Isolierschicht-Vorläuferzusammensetzung.

Der feldsteuernde partikuläre Füllstoff ist in der Isolierschicht-Vorläuferzusammensetzung in einer Menge von 0,1 bis 25%, bezogen auf das Gesamtvolumen der Isolierschicht-Vorläuferzusammensetzung, enthalten. Entsprechend liegt auch der Anteil des partikulären Füllstoffs in der entstehenden Isolierschicht, respektive dem entstehenden Isolierkörper, mit einem Anteil von 0,1 bis 25%, bezogen auf das Volumen der Isolierschicht bzw. des Isolierkörpers, vor.

Erfindungsgemäß werden als Elastomer-Vorläuferzusammensetzung vorzugsweise Silikonverbindungen ausgewählt, welche entweder bei niederer Temperatur (RTV2), bei höherer Temperatur (HTV) oder in flüssigem Zustand vernetzen (LSR). Entsprechend geeignete Verbindungsklassen sind, wie vorab bereits erwähnt, in J. Ackermann, V. Damrath, Chemie und Technologie der Silicone II, Chemie in unserer Zeit, 23. Jahrgang 1989, Nr. 3, S. 86-99, VCH Verlagsgesellschaft mbH, Weinheim, oder auch in B. Pachaly, F. Achenbach et.al., Silicone; aus Winnacker/Küchler: Chemische Technik: Prozesse und Produkte, Band 5, S. 1095-1213, Weinheim, WILEY VCH, 2005, genauer dargestellt und sind auch kommerziell erhältlich. Die entsprechenden Vernetzer, Katalysatoren und gegebenenfalls weiteren Additive sind in der angegebenen Literatur ebenfalls beschrieben.

Die feldsteuernden partikulären Füllstoffe in Form von Kern-Schale-Partikeln, die erfindungsgemäß eingesetzt werden, sind vorab bereits ausführlich erläutert worden. Auf diese Ausführungen wird hier Bezug genommen. Besondere Bedeutung kommt dabei Kern-Schale-Partikeln zu, die neben den gewünschten elektrisch leitenden Eigenschaften ein spezifisches Gewicht von < 5 g/cm$^3$, vorzugsweise < 4 g/cm$^3$ aufweisen, weil diese sich gut homogen in der Isolierschicht-Vorläuferzusammensetzung verteilen lassen und in dieser homogenen Verteilung auch während der Verarbeitung zu einer Isolierschicht/ einem Isolierkörper gehalten werden können.

Nach der Entnahme der Isolierschicht/ des Isolierkörpers aus dem Hohlkörper (der Spritzgießform beim Spritzgussverfahren) wird die Kabelgarnitur in Form einer Kabelmuffe, eines Kabelendverschlusses, eines Kabelsteckers oder einer Kabeldurchführung noch mit einem Außenleiter (Erdpotential) sowie gegebenenfalls mit weiteren Bauteilen bestückt. Einbauten können auch vorab bereits in der Spritzgießform in die Kabelgarnitur integriert worden sein. Anschließend kann die Montage der Kabelgarnitur auf dem HGÜ-Kabel erfolgen. Dies geschieht beispielsweise bei einer Kabelmuffe durch Verbinden der leitenden Kabelenden (Innenleiter) mit Verbindungsstücken und das Einbetten dieser Kabelverbindung in die vervollständigte Kabelmuffe, das vorteilhafterweise über die Aufschiebetechnik oder über ein Aufschrumpfverfahren erfolgt. Ein stark vereinfachtes Verfahren erlaubt es auch, dass die Isolierschicht bzw. der Isolierkörper direkt vor Ort über den bereits verbundenen elektrischen Leitern von Kabelenden per Spritzgussverfahren in einem Hohlkörper (Spritzgießform) hergestellt wird. Ein Außenleiter kann auch nachträglich auf die Isolierschicht einer bereits montierten Kabelmuffe aufgebracht werden.

Gegenstand der vorliegenden Erfindung ist daher auch eine elektrisch isolierende Schicht auf einem Substrat, wobei die elektrisch isolierende Schicht ein Elastomer und einen feldsteuernden partikulären Füllstoff enthält, wobei es sich bei letzterem um Metalloxid enthaltende Kern-Schale-Partikel handelt und das Elastomer ein Silikonkautschuk ist.

Erfindungsgemäß handelt es sich bei dem Substrat vorzugsweise um ein HGÜ-Kabel, welches zumindest teilweise eine äußere elektrisch leitfähige Oberfläche aufweist, d.h. um ein HGÜ-Kabel, welches in Teilbereichen nicht mit einer Isolierschicht versehen ist.

Gemäß der vorliegenden Erfindung weisen die eingesetzten Kern-Schale-Partikel ein spezifisches Gewicht von < 5 g/cm$^3$, vorzugsweise von < 4 g/cm$^3$ auf. Dieses vergleichsweise geringe spezifische Gewicht ermöglicht eine homogene Verteilung der Kern-Schale-Partikel in der Elastomermatrix aus Silikonkautschuk.

Einzelheiten zu den verwendeten Materialien sind bereits oben ausführlich diskutiert worden.

Die erfindungsgemäße elektrisch isolierende Schicht weist einen Durchgangswiderstand im Bereich von 10$^8$ bis 10$^{13}$ Ohm*cm auf. Bei einem Durchgangswiderstand im genannten Bereich wird davon ausgegangen, dass eine gerichtete Ableitung gegebenenfalls in HGÜ-Kabeln auftretender Raumladungen nicht erfolgen kann, sondern dass die elektrisch isolierende Schicht eine diffuse Ladungsverteilung bewirkt und entstehende elektrische Ladungen sukzessive abgeführt werden können, sodass es nicht zu gefährlichen und versteckten Ladungsanhäufungen und Spontanentladungen kommt.

Gegenstand der vorliegenden Erfindung ist auch die Verwendung einer elektrisch isolierenden Schicht, wie vorab beschrieben, als isolierende Schicht in einer Kabelmuffe, einem Kabelendverschluss, einem Kabelstecker oder einer Kabeldurchführung für HGÜ-Kabel.

Neben den oben bereits beschriebenen Vorteilen einer sukzessiven Ladungsableitung bei eventuell auftretenden Raumladungen während des Betriebes von HGÜ-Kabeln weist die erfindungsgemäße Kabelgarnitur in Form einer Kabelmuffe etc. noch weitere Vorteile auf. So kann auf die Ausbildung einer elektrisch isolierenden Schicht, die keinerlei leitfähiges Material enthält, sowie auf eine separate, ableitende Schicht verzichtet werden, wenn die elektrisch isolierende Schicht wie hier beschrieben ausgebildet ist. Der Einsatz von Silikonkautschuk als bevorzugtes Material für die Elastomermatrix bewirkt eine starke Dehnfähigkeit und Elastizität bei relativ kleinen Rückverformungsresten (< 20%) der Kabelgarnitur, verbunden mit einer hohen Reißfestigkeit und einer guten Gaslöslichkeit. Da die erfindungsgemäß eingesetzten Kern-Schale-Partikel mit einer Silikonmatrix hochkompatibel sind und sich homogen in diese einarbeiten lassen, kann das gewünschte Ableitverhalten, welches im Stand der Technik von separaten feldsteuernden Schichten übernommen wird, in der erfindungsgemäßen technischen Lösung von einer geringen Menge an leitfähigem Material, dessen Leitfähigkeit sich speziell an die geforderten Bedingungen anpassen lässt, innerhalb einer elektrisch isolierenden Schicht erzeugt werden. Die erfindungsgemäßen Kabelgarnituren können daher hocheffektiv, wirtschaftlich und bei bestmöglicher Anpassung an die konkreten Erfordernisse hergestellt, als HGÜ-Kabelgarnituren eingesetzt und in der bewährten Aufschiebe- oder Aufschrumpftechnik auf HGÜ-Kabeln aufgebracht werden. Durch formschlüssige Anpassung an die zu verbindenden Kabelstücke und Durchmesser wird auch die Ausbildung von Luft- oder Fremdstoffeinschlüssen zwischen Kabel und Kabelgarnitur weitestgehend vermieden, so dass die Verlustleistung minimiert werden kann.

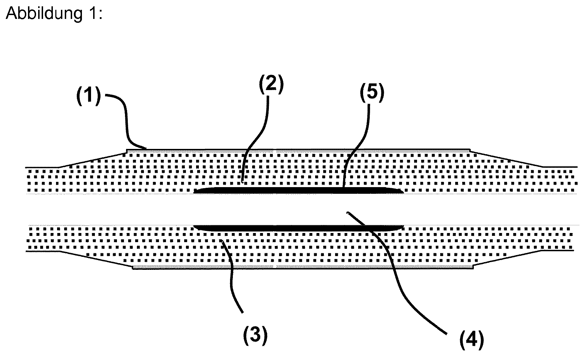

Abbildung 1 zeigt eine schematische Darstellung einer Kabelmuffe gemäß der vorliegenden Erfindung mit einer Außenleiterschicht (1), erfindungsgemäßen Isolierschichten (2) und (3) sowie einem HGÜ-Kabelkanal (4) mit leitfähiger Innenschicht als Verbindungselement (5).

Die vorliegende Erfindung soll nachfolgend anhand von Beispielen erläutert, jedoch nicht auf diese beschränkt werden.

Beispiele:

Beispiele 1 bis 3:

Herstellung von Kern-Schale-Partikeln als Füllstoffe

100 g gemahlener und klassierter natürlicher Glimmer werden in 1900 ml VE-Wasser suspendiert. Im Sauren wird die Suspension bei 75°C unter Rühren mit einer 50 Gew.%igen wässrigen SnCl$_4$-Lösung, HCl und einer 35 Gew.%-igen wässrigen SbCl$_3$-Lösung tropfenweise versetzt. Durch gleichzeitige geregelte Zudosierung von Natronlauge wird der pH-Wert konstant gehalten. Nach Zugabe der Gesamtmenge der Lösung wird noch 30 min bei 75°C nachgerührt, bevor eine 50 Gew.%ige Lösung aus Titanoxychlorid gleichmäßig und unter Zudosierung von Natronlauge bei konstantem pH-Wert zugegeben wird (Zugabe von Titanoxychlorid nur in Beispiel 3). Anschließend wird unter Rühren auf Raumtemperatur abgekühlt und die Reaktionsmischung neutralisiert. Das erhaltene Pigment wird über eine Nutsche abfiltriert, mit Wasser gewaschen, bei 140°C getrocknet und ca. 30 min. bei 800°C geglüht. Man erhält in Abhängigkeit vom Antimongehalt hellgraues bis ockergelbes Pigmentpulver. In den Beispielen 1-3 werden über die Variation des Antimongehaltes im Zinnoxid die spezifischen Pulverwiderstände der Pigmente variiert, wie in Tabelle 1 dargestellt. Die erhaltenen Pigmentpartikel weisen einen Kern aus natürlichen, plättchenförmigen Glimmer (Teilchengröße < 15 μm) und eine darauf haftfest aufgefällte Schale aus mit Antimon dotiertem Zinnoxid sowie gegebenenfalls Titanoxid auf.

Die Messung des spezifischen Widerstandes eines Pigmentpulvers erfolgt wie vorab bereits beschrieben.

Tabelle 1

| Beispiel | Mol% Sb | Mol% Ti | p [Ohm·cm] |
|---|---|---|---|
| 1 | 8 | 0 | 28 |
| 2 | 1,0 | 0 | $2,5 \times 10^6$ |
| 3 | 1,0 | 8 | $3,0 \times 10^9$ |

Beispiele 4 bis 8:

Herstellung von Silikonprüfkörpern

Herstellung von Silikonplatten aus Raumtemperatur-vernetzendem Silikon (RTV2)

Die in Tabelle 2 angegebenen Mengen an Kern-Schale-Partikeln aus den Beispielen 1 bis 3 werden in einer Dose mit den jeweiligen Anteilen der Komponente A eines kommerziellen RTV2 Silikonharzes (Materialdaten des Herstellers: A:B = 9:1, Viskosität der Mischung 3500 mPa*s bei 23°C, Shore A Härte 45°) grob vorgemischt und in einem Vakuumspeedmixer (Fa. Hauschild) bei auf 4 mbar reduziertem Druck und 1600 Umdrehungen pro Minute mindestens 2 Minuten lang homogenisiert. Im Anschluss werden die jeweiligen Mengen der Komponente B desselben RTV2 Silikonharzes hinzugefügt, die Komponenten wieder grob vorgemischt und mindestens 1 Minute bei 4 mbar und 1600 Umdrehungen pro Minute im Vakuumspeedmixer homogenisiert. Jetzt wird die viskose Masse zügig, unter Einhaltung der Topfzeit, in eine Form vergossen, die die geometrischen Abmessungen des Prüfkörpers vorgibt. Das Silikonharz wird in der Form für mindestens 30 Minuten bei 70°C ausgehärtet. Nach Abkühlen der Form wird die Form geöffnet und der Prüfkörper entnommen und staubfrei gelagert.

Die Silikonprüflinge sind in Form von Platten mit den Abmessungen 100 mm x 100 mm und einer Stärke von 5 mm, 2 mm und 1 mm für mechanische Testungen bzw. für elektrische Versuche ausgeführt. Die Menge und Art der Einsatzstoffe wird gemäß Tabelle 2 variiert.

Tabelle 2:

| Beispiele | RTV2, Komponente A [g] | RTV2, Komponente B [g] | Füllstofftyp | Füllstoffmenge [g] | PVK* [%] |
|---|---|---|---|---|---|
| 4 | 108,0 | 12,0 | - | 0,0 | 0,0 |
| 5 | 97,2 | 10,8 | Beispiel 2 | 12,0 | 3,1 |
| 6 | 75,6 | 8,4 | Beispiel 2 | 36,0 | 11,1 |
| 7 | 97,2 | 10,8 | Beispiel 1 | 12,0 | 2,8 |
| 8 | 97,2 | 10,8 | Beispiel 3 | 36,0 | 11,9 |
| *PVK = Pigment-Volumen-Konzentration | | | | | |

Beispiele 9 - 11:

Herstellung von Silikonplatten aus flüssigen reaktiven Silikonverbindungen (LSR)

Die in Tabelle 3 angegebene Menge an Komponente A eines kommerziellen Silikonharzes vom Typ LSR (Materialdaten des Herstellers: A:B = 1:1, Viskosität der Komponenten 100 Pa*s bei 20°C, Shore A Härte 40°) wird mit der jeweiligen Menge an Kern-Schale-Partikeln aus den Beispielen 2 und 3 und der in Tabelle 3 angegebenen Menge der Komponente B desselben LSR Silikonharzes in eine Dose eingewogen und grob vermischt. Auf geringen Lufteintrag soll geachtet werden. Die Dose wird in einen Vakuumspeedmixer (Fa. Hauschild) eingesetzt und die Mischung bei auf 4 mbar reduziertem Druck und 2000 Umdrehungen pro Minute mindestens 3 Minuten lang homogenisiert. Jetzt wird die hochviskose Masse zügig, unter Einhaltung der Topfzeit in eine auf 60°C vorgewärmte Form vergossen, die die geometrischen Abmessungen des Prüfkörpers vorgibt. Das Silikonharz wird in der Form für mindestens 5 Stunden bei 125 °C vernetzt. Nach dem Abkühlen der Form wird der Prüfkörper entnommen und weitere 14 Stunden bei 125 °C auf einer Glasplatte im Ofen ausgehärtet.

Die Silikonprüflinge sind in Form von Platten mit den Abmessungen 100 mm x 100 mm und einer Stärke von 5 mm, 2mm und 1 mm für mechanische Testungen bzw. für elektrische Versuche ausgeführt. Tabelle 3 zeigt die Variation der Mengen an Silikonkomponenten und Füllstoff.

Tabelle 3:

| Beispiel | LSR-Silikon, Komponente A [g] | LSR-Silikon, Komponente B [g] | Füllstofftyp | Füllstoffmenge [g] | PVK [%] |
|---|---|---|---|---|---|
| 9 | 60,0 | 60,0 | - | 0,0 | 0,0 |
| 10 | 53,9 | 53,9 | Beispiel 2 | 12,2 | 3,1 |
| 11 | 54,3 | 54,3 | Beispiel 2 | 11,5 | 3,3 |
| 12 | 54,3 | 54,3 | Beispiel 3 | 11,3 | 3,3 |
| 13 | 43,2 | 43,2 | Beispiel 3 | 33,6 | 11,3 |

Messung der Shore A Härte:

Die Härte von Elastomeren wird nach DIN ISO 7619-1 durch das stoßfreie Eindrücken eines Stahl-Indenters mit Federkraft für 15 Sekunden in den Probekörper bestimmt. Der Indenter zur Bestimmung nach Shore A weist dabei eine Kegelstumpfgeometrie auf.

Messung der Dehnungseigenschaften:

Die Messung der Reißdehnung und Reißfestigkeit werden nach ISO 37 am Instron 5967 Testsystem mit einer Traversengeschwindigkeit von 200 mm/min an einem 1 mm dicken Schulterstab, wie er für Elastomere üblich ist (DIN 53504 S2), durchgeführt. Entsprechend der geringeren Vernetzung des RTV2 Materials weicht es schon früh vom elastischen Verhalten ab und beginnt sich ab ca. 30% Dehnung irreversibel zu verhalten. Das stärker vernetzte LSR Material verhält sich meist bis kurz vor dem Reißen elastisch.

Messung der Durchschlagsfestigkeit:

Die Durchschlagsfestigkeit wird an 2 mm dicken Prüflingen (ca. 30 mm x 40 mm) am Isolierstoffprüfgerät DTA 100 von Baur durchgeführt. Die Probe wird dicht zwischen zwei Elektroden in Scheibenform nach ASTM D877 eingespannt und die Prüfzelle mit Silikonöl (AP 100, Aldrich) gefüllt, so dass der Prüfling vollkommen bedeckt ist, um Vorentladungen über die Luft zu vermeiden. Die Spannung wird in Schritten von 2kV/s gesteigert und die Spannung, die der Entladung vorausgeht, wird registriert.
Tabelle 4 zeigt die entsprechenden Messergebnisse.

Tabelle 4:

| Beispiel | 4 | 5 | 6 | 7 | 8 |
|---|---|---|---|---|---|
| Füllstoff aus Beispiel | - | 2 | 2 | 1 | 3 |
| Silikontyp | RTV2 | RTV2 | RTV2 | RTV2 | RTV2 |
| PVK [%] | 0,0 | 3,1 | 11,1 | 2,9 | 11,9 |
| Shore A Härte | 35 | 48 | 69 | 48 | 69 |
| Reißdehnung [%] (bei Zugspannung MPa) | 115 (5,3) | 120 (5,8) | 128 (5,6) | 126 (5,4) | 142 (6,1) |
| Durchschlagfestigkeit [kV] | 42,2 | 48,9 | 50,7 | 48,5 | 51,2 |

| Beispiel | 9 | 10 | 11 | 12 | 13 |
|---|---|---|---|---|---|
| Füllstoff aus Beispiel | - | 1 | 2 | 3 | 3 |
| Silikontyp | LSR | LSR | LSR | LSR | LSR |
| PVK [%] | 0,0 | 3,1 | 3,3 | 3,3 | 11,3 |
| Shore A Härte | 33 | 47 | 53 | 55 | 70 |
| Reißdehnung [%] (bei Zugspannung MPa) | 325 (2,9) | 324 (3,0) | 326 (3,0) | 335 (3,3) | 340 (3,9) |
| Durchschlagfestigkeit [kV] | 31,2 | 39,8 | 41,2 | 43,4 | 52,8 |

Die elektrische Festigkeit in Form der ermittelten Durchschlagsspannung steigt in den gezeigten Polymer Kompositen mit dem Füllgrad deutlich an, ohne dass die elastische Dehnbarkeit darunter leidet. Insbesondere Beispiel 8 mit einem Füllgrad von ca. 12 Vol.% zeigt zusätzlich noch eine wesentlich stärkere mechanische Belastungsfähigkeit als das ungefüllte Silikonmaterial. Die elektrische Durchschlagsfestigkeit steigert sich beim LSR-Silikon mit zunehmendem Füllgrad um bis zu 69% und auch die elastische Dehnbarkeit des gefüllten Materials nimmt zu. Auch beim geringer vernetzten RTV2-Material führt eine höhere Füllung zu einer um bis zu 21% besseren elektrischen Festigkeit. Die besten elektrischen Eigenschaften lassen sich mit dem halbleitfähigen Füllstoff aus Beispiel 3 erzielen.

**Patentansprüche**

1. Kabelgarnitur für HGÜ-Kabel, umfassend einen Formkörper, welcher mehrschichtig aufgebaut ist und eine elektrisch isolierende Schicht aufweist, die ein Elastomer und einen feldsteuernden partikulären Füllstoff in homogener Verteilung umfasst, wobei es sich bei dem feldsteuernden partikulären Füllstoff um Metalloxid enthaltende Kern-Schale-Partikel handelt und die Kern-Schale-Partikel ein spezifisches Gewicht von < 5 g/cm$^3$ aufweisen.

2. Kabelgarnitur gemäß Anspruch 1, wobei es sich um eine Kabelmuffe, einen Kabelendverschluss, einen Kabelstecker oder um eine Kabeldurchführung handelt.

3. Kabelgarnitur gemäß Anspruch 1 oder 2, wobei es sich bei dem Elastomer um einen Silikonkautschuk handelt.

4. Kabelgarnitur gemäß Anspruch 3, wobei es sich bei dem Silikonkautschuk um einen Silikonkautschuk vom Typ RTV2, einen Silikonkautschuk vom Typ HTV oder um einen Silikonkautschuk vom Typ LSR handelt.

5. Kabelgarnitur gemäß einem oder mehreren der Ansprüche 1 bis 4, wobei der Kern und/oder die Schale der Kern-Schale-Partikel mindestens ein elektrisch leitfähiges oder elektrisch halbleitfähiges Metalloxid enthält.

6. Kabelgarnitur gemäß Anspruch 5, wobei es sich bei dem elektrisch leitfähigen oder elektrisch halbleitfähigen Metalloxid um ein dotiertes Metalloxid, ein Metallsuboxid oder um ein sauerstoffdefizitäres Metalloxid handelt.

7. Kabelgarnitur gemäß Anspruch 6, wobei das Metalloxid ausgewählt ist aus der Gruppe bestehend aus Oxiden, Mischoxiden oder Oxidgemischen von Zink, Zinn, Germanium, Titan, Gallium, Indium, Antimon, Silizium, Wolfram, Molybdän, Blei, Cadmium, Kalzium, Strontium, Barium, Kupfer und Rhenium.

8. Kabelgarnitur gemäß einem oder mehreren der Ansprüche 6 und 7, wobei das Metalloxid mit einem oder mehreren der Elemente Antimon, Indium, Wolfram, Molybdän, Chrom, Kobalt, Mangan, Eisen, Cadmium, Gallium, Germanium, Zinn, Vanadium, Niob, Tantal, Cer, Scandium, Lanthan, Yttrium, Bismuth, Titan, Kupfer, Kalzium, Strontium, Barium, Aluminium, Arsen, Phosphor, Stickstoff, Bor, Fluor oder Chlor dotiert ist.

9. Kabelgarnitur gemäß einem oder mehreren der Ansprüche 5 bis 8, wobei der Kern der Kern-Schale-Partikel aus einem dielektrischen Material besteht und die Schale mindestens ein elektrisch leitfähiges oder elektrisch halbleitfähiges Metalloxid enthält.

10. Kabelgarnitur gemäß einem oder mehreren der Ansprüche 1 bis 9, wobei die elektrisch isolierende Schicht den feldsteuernden partikulären Füllstoff in einer Menge von 0,1 bis 25%, bezogen auf das Volumen der elektrisch isolierenden Schicht, enthält.

11. Kabelgarnitur gemäß einem oder mehreren der Ansprüche 1 bis 10, wobei die elektrisch isolierende Schicht einen Durchgangswiderstand im Bereich von $10^8$ bis $10^{13}$ Ohm*cm aufweist.

12. Verfahren zur Herstellung einer elektrisch isolierenden Schicht einer Kabelgarnitur gemäß einem oder mehreren der Ansprüche 1 bis 11, **dadurch gekennzeichnet, dass**

- eine unverfestigte Elastomer-Vorläuferzusammensetzung, ein Vernetzungsmittel, ein feldsteuernder partikulärer Füllstoff, welcher Metalloxid enthaltende Kern-Schale-Partikel enthält und ein spezifisches Gewicht von < 5 g/cm$^3$ aufweist, sowie optional weitere Additive, homogen miteinander vermischt werden, sodass eine Isolierschicht-Vorläuferzusammensetzung erhalten wird,
- die Isolierschicht-Vorläuferzusammensetzung in einen Hohlkörper eingebracht wird, welcher einen Hohlraum mit einer äußeren Form aufweist, die der Form der elektrisch isolierenden Schicht einer Kabelgarnitur entspricht, und

- die Isolierschicht-Vorläuferzusammensetzung durch Stehenlassen oder Zufuhr von Wärme und/oder aktinischer Strahlung vernetzend verfestigt und die dabei gebildete Isolierschicht aus dem Hohlkörper entfernt wird.

**13.** Verfahren gemäß Anspruch 12, **dadurch gekennzeichnet, dass** die Isolierschicht-Vorläuferzusammensetzung mittels eines Spritzgussverfahrens in den Hohlkörper eingebracht wird.

**14.** Verfahren gemäß den Ansprüchen 12 oder 13, **dadurch gekennzeichnet, dass** es sich bei der unverfestigten Elastomer-Vorläuferzusammensetzung um eine Silikonzusammensetzung vom Typ RTV2, eine Silikonzusammensetzung vom Typ HTV oder um eine Silikonzusammensetzung vom Typ LSR handelt.

**15.** Verfahren gemäß einem oder mehreren der Ansprüche 12 bis 14, **dadurch gekennzeichnet, dass** der feldsteuernde partikuläre Füllstoff in einer Menge von 0,1 bis 25%, bezogen auf das Volumen der Isolierschicht-Vorläuferzusammensetzung, in dieser enthalten ist.

**16.** HGÜ-Kabel mit einer äußeren elektrisch isolierenden Schicht, wobei das HGÜ-Kabel zumindest teilweise eine äußere elektrische leitfähige Oberfläche aufweist, wobei die elektrisch isolierende Schicht ein Elastomer und einen feldsteuernden partikulären Füllstoff enthält, wobei es sich bei dem feldsteuernden partikulären Füllstoff um Metalloxid enthaltende Kern-Schale-Partikel handelt, die ein spezifisches Gewicht von < 5 g/cm$^3$ aufweisen und homogen im Elastomer verteilt sind und das Elastomer ein Silikonkautschuk ist.

**17.** HGÜ-Kabel gemäß Anspruch 16, wobei die elektrisch isolierende Schicht einen Durchgangswiderstand im Bereich von $10^8$ bis $10^{13}$ Ohm*cm aufweist.

## Claims

**1.** Cable fitting for HVDC cables, comprising a moulding which has multilayer structure and which has an electrically insulating layer that comprises an elastomer and that comprises a field-controlling particulate filler in homogeneous distribution, wherein the field-controlling particulate filler is metal-oxide-containing core-shell particles and the core-shell particles have a density of < 5 g/cm$^3$.

**2.** Cable fitting according to Claim 1, wherein it is a cable sleeve, a cable end seal, a cable plug or a cable bushing.

**3.** Cable fitting according to Claim 1 or 2, wherein the elastomer is a silicone rubber.

**4.** Cable fitting according to Claim 3, wherein the silicone rubber is a silicone rubber of RTV2 type, a silicone rubber of HTV type or a silicone rubber of LSR type.

**5.** Cable fitting according to one or more of Claims 1 to 4, wherein the core and/or the shell of the core-shell particles comprise(s) at least one electrically conductive or electrically semiconductive metal oxide.

**6.** Cable fitting according to Claim 5, wherein the electrically conductive or electrically semiconductive metal oxide is a doped metal oxide, a metal suboxide or an oxygen-deficient metal oxide.

**7.** Cable fitting according to Claim 6, wherein the metal oxide is selected from the group consisting of oxides, mixed oxides or oxide mixtures of zinc, tin, germanium, titanium, gallium, indium, antimony, silicon, tungsten, molybdenum, lead, cadmium, calcium, strontium, barium, copper and rhenium.

**8.** Cable fitting according to one or more of Claims 6 and 7, wherein the metal oxide has been doped with one or more of the elements antimony, indium, tungsten, molybdenum, chromium, cobalt, manganese, iron, cadmium, gallium, germanium, tin, vanadium, niobium, tantalum, cerium, scandium, lanthanum, yttrium, bismuth, titanium, copper, calcium, strontium, barium, aluminium, arsenic, phosphorus, nitrogen, boron, fluorine and chlorine.

**9.** Cable fitting according to one or more of Claims 5 to 8, wherein the core of the core-shell particles consists of a dielectric material and the shell comprises at least one electrically conductive or electrically semiconductive metal oxide.

10. Cable fitting according to one or more of Claims 1 to 9, wherein the electrically insulating layer comprises a quantity of from 0.1 to 25%, based on the volume of the electrically insulating layer, of the field-controlling particulate filler.

11. Cable fitting according to one or more of Claims 1 to 10, wherein the volume resistivity of the electrically insulating layer is in the range from $10^8$ to $10^{13}$ ohm*cm.

12. Process for the production of an electrically insulating layer of a cable fitting according to one or more of Claims 1 to 11, **characterized in that**

   - an unhardened elastomer-precursor composition, a crosslinking agent and a field-controlling particulate filler which comprises metal-oxide-containing core-shell particles and has a density of < 5 g/cm$^3$, and also optionally further additives, are homogeneously mixed with one another to give an insulation-layer-precursor composition,
   - the insulation-layer-precursor composition is introduced into a hollow body which has a cavity with an exterior shape corresponding to the shape of the electrically insulating layer of a cable fitting, and
   - the insulation-layer-precursor composition is hardened in a crosslinking manner by passage of time or introduction of heat and/or of high-energy radiation, and the resultant insulation layer is removed from the hollow body.

13. Process according to Claim 12, **characterized in that** the insulation-layer-precursor composition is introduced into the hollow body by means of an injection moulding process.

14. Process according to Claims 12 or 13, **characterized in that** the unhardened elastomer-precursor composition is a silicone composition of RTV2 type, a silicone composition of HTV type or a silicone composition of LSR type.

15. Process according to one or more of Claims 12 to 14, **characterized in that**, based on the volume of the insulation-layer-precursor composition, the quantity present therein of the field-controlling particulate filler is from 0.1 to 25%.

16. HVDC cable with an outer electrically insulating layer, wherein the HVDC cable has, at least to some extent, an outer electrically conductive surface, wherein the electrically insulating layer comprises an elastomer and a field-controlling particulate filler, wherein the field-controlling particulate filler is metal oxide-containing core-shell particles which have a density of < 5 g/cm$^3$ and are distributed homogeneously in the elastomer and the elastomer is a silicone rubber.

17. HVDC cable according to Claim 16, wherein the volume resistivity of the electrically insulating layer is in the range from $10^8$ to $10^{13}$ ohm*cm.

## Revendications

1. Accessoire de câble pour câble CCHT, comprenant un corps moulé qui présente une structure multicouche et comporte une couche électriquement isolante qui comprend un élastomère et une charge particulaire de répartition de champ en distribution homogène, la charge particulaire de répartition de champ consistant en des particules à noyau-enveloppe contenant un oxyde métallique, et les particules à noyau-enveloppe ayant un poids spécifique de < 5 g/cm$^3$

2. Accessoire de câble selon la revendication 1, consistant en une jonction de câble, une terminaison de câble, un connecteur de câble ou une traversée de câble.

3. Accessoire de câble selon la revendication 1 ou 2, dans lequel pour ce qui est de l'élastomère, il s'agit d'un caoutchouc silicone.

4. Accessoire de câble selon la revendication 3, dans lequel pour ce qui est du caoutchouc silicone il s'agit d'un caoutchouc silicone du type RTV2, d'un caoutchouc silicone du type HTV ou d'un caoutchouc silicone du type LSR.

5. Accessoire de câble selon une ou plusieurs des revendications 1 à 4, dans laquelle le noyau et/ou l'enveloppe des particules à noyau-enveloppe contient/contiennent au moins un oxyde métallique électriquement conducteur ou électriquement semi-conducteur.

6. Accessoire de câble selon la revendication 5, dans lequel pour ce qui est de l'oxyde métallique électriquement conducteur ou électriquement semi-conducteur il s'agit d'un oxyde métallique dopé, d'un sous-oxyde métallique ou d'un oxyde métallique déficient en oxygène.

7. Accessoire de câble selon la revendication 6, dans lequel l'oxyde métallique est choisi dans le groupe constitué par les oxydes, les oxydes mixtes ou les mélanges d'oxydes de zinc, d'étain, de germanium, de titane, de gallium, d'indium, d'antimoine, de silicium, de tungstène, de molybdène, de plomb, de cadmium, de calcium, de strontium, de baryum, de cuivre et de rhénium.

8. Accessoire de câble selon une ou plusieurs des revendications 6 et 7, dans lequel l'oxyde métallique est dopé avec un ou plusieurs des éléments antimoine, indium, tungstène, molybdène, chrome, cobalt, manganèse, fer, cadmium, gallium, germanium, étain, vanadium, niobium, tantale, cérium, scandium, lanthane, yttrium, bismuth, titane, cuivre, calcium, strontium, baryum, aluminium, arsenic, phosphore, azote, bore, fluor ou chlore.

9. Accessoire de câble selon une ou plusieurs des revendications 5 à 8, dans lequel le noyau des particules à structure noyau-enveloppe est constitué d'un matériau diélectrique et l'enveloppe contient au moins un oxyde métallique électriquement conducteur ou électriquement semi-conducteur.

10. Accessoire de câble selon une ou plusieurs des revendications 1 à 9, dans lequel la couche électriquement isolante contient la charge particulaire de répartition de champ en une quantité de 0,1 à 25 %, par rapport au volume de la couche électriquement isolante.

11. Accessoire de câble selon une ou plusieurs des revendications 1 à 10, dans lequel la couche électriquement isolante présente une résistance de passage dans la plage de $10^8$ à $10^{13}$ ohm*cm.

12. Procédé pour la production d'une couche électriquement isolante d'un accessoire de câble selon une ou plusieurs des revendications 1 à 11, **caractérisé en ce que**

    - une composition précurseur d'élastomère non durcie, un agent de réticulation, une charge particulaire de répartition de champ qui contient des particules à noyau-enveloppe contenant un oxyde métallique et présente une masse volumique de < 5 g/cm$^3$, ainsi qu'en option des additifs supplémentaires, sont mélangés de manière homogène, de sorte qu'une composition précurseur de couche isolante est obtenue,
    - la composition précurseur de couche isolante est introduite dans un corps creux qui comporte une cavité ayant une forme extérieure qui correspond à la forme de la couche électriquement isolante d'un accessoire de câble, et
    - la composition précurseur de la couche isolante est durcie par réticulation, réalisée par maintien au repos ou apport de chaleur et/ou de rayonnement actinique, et la couche isolante ainsi formée est retirée du corps creux.

13. Procédé selon la revendication 12, **caractérisé en ce que** la composition précurseur de couche isolante est introduite dans le corps creux au moyen d'un procédé de moulage par injection.

14. Procédé selon les revendications 12 et 13, **caractérisé en ce que** pour ce qui est de la composition précurseur d'élastomère non durcie il s'agit d'une composition de silicone du type RTV2, d'une composition de silicone du type HTV ou d'une composition de silicone du type LSR.

15. Procédé selon une ou plusieurs des revendications 12 à 14, **caractérisé en ce que** la charge particulaire de répartition de champ est contenue dans la composition précurseur de couche isolante en une quantité de 0,1 à 25 % par rapport au volume de cette dernière.

16. Câble CCHT comportant une couche externe électriquement isolante, le câble HVDC présentant au moins partiellement une surface externe électriquement conductrice, la couche électriquement isolante contenant un élastomère et une charge particulaire de répartition de champ, dans lequel pour ce qui est de la charge particulaire de répartition de champ il s'agit de particules à noyau-enveloppe contenant un oxyde métallique, qui présentent une masse volumique de < 5 g/cm$^3$ et sont distribuées de manière homogène dans l'élastomère et l'élastomère est un caoutchouc silicone.

17. Câble CCHT selon la revendication 16, dans lequel la couche électriquement isolante présente une résistance de passage dans la plage de $10^8$ à $10^{13}$ ohm*cm.

Abbildung 1:

IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0074191 A1
- DE 19746313 A1
- EP 2026438 A1
- WO 2016096276 A1

**In der Beschreibung aufgeführte Nicht-Patentliteratur**

- **J. ACKERMANN** ; **V. DAMRATH**. Chemie und Technologie der Silicone II. VCH Verlagsgesellschaft mbH, 1989, vol. 23, 86-99
- **B. PACHALY** ; **F. ACHENBACH**. Silicone; aus Winnacker/Küchler: Chemische Technik: Prozesse und Produkte. WILEY VCH, 2005, vol. 5, 1095-1213
- **J. ACKERMANN** ; **V. DAMRATH**. Chemie und Technologie der Silicone II, Chemie in unserer Zeit. VCH Verlagsgesellschaft mbH, 1989, 86-99